Europäisches Patentamt

**European Patent Office**

Office européen des brevets

(19)

(11) Numéro de publication : **0 008 266**
**B1**

(12)                    # FASCICULE DE BREVET EUROPÉEN

(45) Date de publication du fascicule du brevet :
19.05.82

(51) Int. Cl.³ : **B 62 M   3/08**

(21) Numéro de dépôt : **79400535.5**

(22) Date de dépôt : **26.07.79**

(54) **Dispositif de sécurité pour courroie de cale-pied comportant une boucle de serrage.**

(30) Priorité : **28.07.78 FR 7822440**
**29.06.79 FR 7917000**

(43) Date de publication de la demande :
**20.02.80 (Bulletin 80/04)**

(45) Mention de la délivrance du brevet :
**19.05.82 Bulletin 82/20**

(84) Etats contractants désignés :
**AT BE CH DE GB IT LU NL SE**

(56) Documents cités :
**FR - A - 1 043 489**
**FR - A - 2 280 541**
**US - A - 3 842 688**

(73) Titulaire : **POUTRAIT-MORIN**
**24, rue de la Courneuve**
**F-93300-Aubervilliers (FR)**

(72) Inventeur : **Le Bec, Dominique**
**129 Avenue du Roule**
**F-92200-Neuilly S/Seine (FR)**

(74) Mandataire : **Foldès, Georges et al**
**CABINET J. BONNET THIRION 95 Bd. Beaumarchais**
**F-75003 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

# Dispositif de sécurité pour courroie de cale-pied comportant une boucle de serrage

La présente invention a pour objet un dispositif de sécurité pour courroie de cale-pied comportant une boucle de serrage.

Il est bien connu que les cale-pieds fixés sur les pédales de bicyclettes, ou autres véhicules analogues, sont généralement pourvus d'une courroie dont une extrémité est équipée d'une boucle de serrage, adaptée d'une part, à maintenir le pied enserré dans le cale-pied lorsqu'une traction a été exercée à l'autre extrémité de la courroie, et, d'autre part, à permettre de libérer le pied du cale-pied en agissant sur un organe de desserrage, prévu à cet effet, autorisant le coulissement de la boucle par rapport à la courroie.

A titre documentaire, on citera comme étant de la technique le brevet français n° 1.043.489 publié le 9 novembre 1953.

Mais, pour libérer le pied du cale-pied, le cycliste doit nécessairement se pencher pour actionner manuellement ledit organe de desserrage, et par conséquent agir successivement sur la boucle de droite, et la boucle de gauche, ou vice versa, pour descendre de bicyclette.

Lorsque le cycliste prévoit ces manœuvres il n'y a pas de problème particulier, mais par contre lorsque le cycliste est surpris, et doit mettre pied à terre rapidement, il n'a généralement pas le temps nécessaire de libérer au moins un pied d'un cale-pied et il s'ensuit une chute possible, du fait qu'il est comme lié à sa machine par ses pieds enserrés dans les cale-pieds.

De tels inconvénients sont encore aggravés lorsque les semelles des chaussures du cycliste sont munies d'une cale comportant une saignée destinée à être engagée sur un bord d'une joue de la pédale.

La présente invention vise un dispositif compact, de réalisation simple et robuste, permettant au cycliste de se libérer les pieds des cale-pieds, instantanément en cas de besoin, en sorte que les inconvénients mentionnés ci-dessus se trouvent supprimés.

Suivant les caractéristiques principales de l'invention, le dispositif de sécurité comprend :

— un organe de déclenchement qui s'étend transversalement de part et d'autre d'une platine auquel il est solidarisé par pivot, ledit organe étant, à une de ses parties terminales, solidarisé avec une extrémité de la courroie, tandis que l'autre extrémité de la courroie est associée à l'autre partie terminale de l'organe de déclenchement en passant au travers d'une boucle de serrage ;

— un verrou escamotable coopérant avec la platine et comportant des moyens de cames, ce verrou étant incorporé audit organe de déclenchement, et apte à maintenir la boucle de serrage dans une position active pour laquelle la courroie peut être mise sous tension, ou à la mettre dans une position inactive pour laquelle la courroie est libre en réponse à un pivotement commandé de l'organe de déclenchement, et ce, sous l'impulsion d'un couple exercé par le pied du cycliste sur les tronçons de courroie situés de part et d'autre de l'organe de déclenchement.

La boucle de serrage est donc asservie à l'organe de déclenchement, et, selon une forme d'exécution de l'invention les moyens de came du verrou sont adaptés à coopérer avec des moyens de rampes prévus dans la platine. Selon une autre forme d'exécution de l'invention le verrou, qui s'étend longitudinalement à l'intérieur de l'organe de déclenchement, comporte de part et d'autre d'un axe de symétrie une came apte à coopérer avec une rampe correspondante prévue à cet effet dans un boîtier en deux parties assemblées. Ainsi, le verrou peut occuper dans le boîtier une position stable pour laquelle la boucle de serrage peut être mise sous tension, ou une position effacée pour laquelle ladite boucle de serrage est libérée et, partant, la courroie.

Un tel dispositif monté sur un cale-pied pour pédale de cycle de nuit en aucune façon à l'esthétique de la machine puisqu'il est compact ; sa légèreté, mais en même temps sa robustesse, et sa facilité de fonctionnement, en font un accessoire particulièrement utile.

Etant donné qu'avec un tel dispositif la courroie de serrage peut être instantanément libérée, par un mouvement de pied ne réclamant pratiquement pas d'effort, on comprendra qu'un cycliste peut, à tout moment et instantanément se libérer les deux pieds tout en conservant les mains au guidon.

Ainsi, non seulement il peut, le cas échéant, se désolidariser de sa machine, mais encore et simultanément il peut conserver la maîtrise de celle-ci notamment du fait qu'il reste en bonne position sur le cycle.

D'autres caractéristiques et avantages de la présente invention ressortiront d'ailleurs de la description qui va suivre, donnée à titre d'exemple, en référence aux planches de dessins annexées dans lesquelles :

la figure 1 illustre en perspective, à plus grande échelle, et avec arrachement partiel, une forme de réalisation de l'invention ;

la figure 2 est une vue en coupe longitudinale suivant un plan passant par la ligne II-II à la figure 1 ;

la figure 3 est une vue en plan avec coupe selon la ligne III-III de la figure 2 ;

la figure 4 est une vue analogue à la figure 3, l'organe de déclenchement étant dans une position où la courroie est libérée ;

la figure 5 est une vue suivant un plan passant par la ligne V-V de la figure 4, le verrou ainsi que la platine n'étant pas coupés ;

les figures 6 et 7 montrent schématiquement en plan un dispositif suivant l'invention aménagé pour équiper (figure 6) une pédale gauche et (figure 7) une pédale droite ;

la figure 8 illustre en perspective une pédale avec un cale-pied comportant une courroie équipée d'un dispositif de sécurité selon une variante de réalisation ;

la figure 9 est une vue en perspective avec arrachement partiel de cette variante de réalisation, le dispositif étant représenté en position de verrouillage ;

la figure 10 est une vue analogue à la précédente, le dispositif étant déverrouillé ;

la figure 11 est une vue en perspective éclatée montrant les différents éléments du dispositif de sécurité selon les figures 8 à 10 ;

les figures 12 et 13 sont des vues en plan montrant les deux positions de déverrouillage.

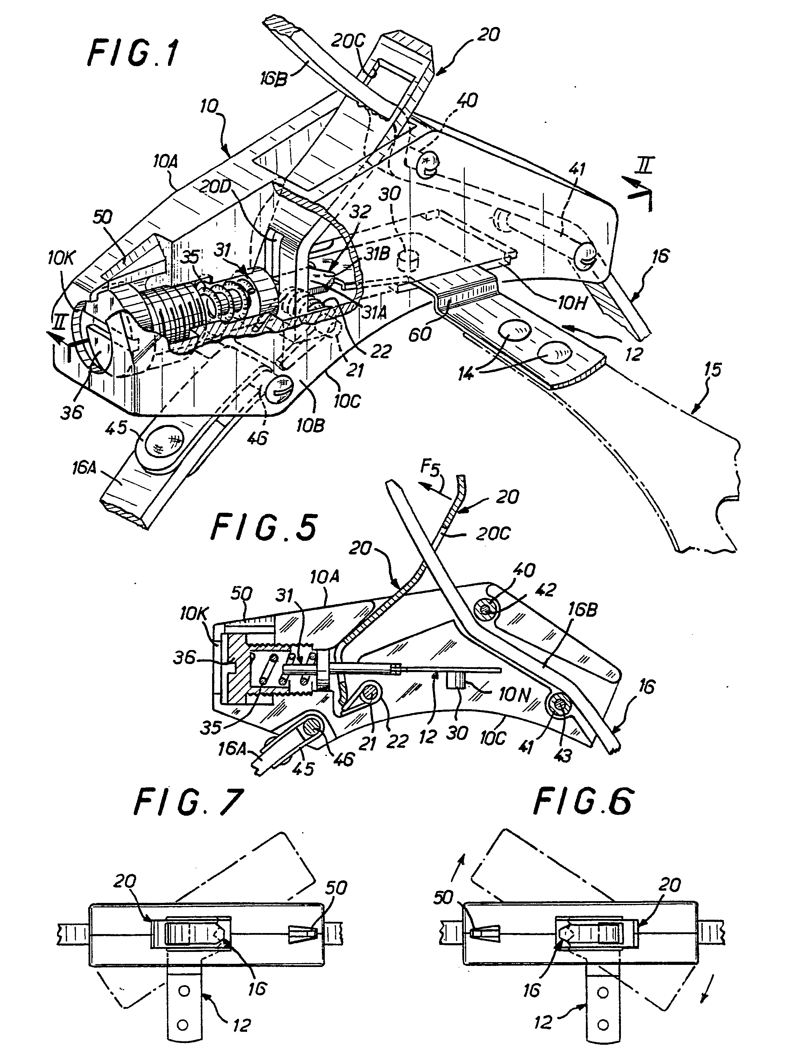

Dans la forme de réalisation choisie et représentée aux figures 1 à 5, le dispositif de sécurité pour courroie de cale-pied suivant l'invention comprend un organe de déclenchement 10, de forme globalement parallélépipédique, constitué par un boîtier en deux parties assemblées 10A, 10B, avec un fond 10C sensiblement en arc de cercle ; le boîtier est, au voisinage de son fond associé à une platine 12 au moyen d'un pivot 30 prévu sur cette dernière, la platine 12 étant elle-même destinée à être solidarisée en 14 à la partie terminale de la branche libre d'un cale-pied indiqué partiellement en traits mixtes par 15.

L'axe longitudinal du boîtier 10 est orienté transversalement par rapport à la branche du cale-pied et, à une partie terminale, le fond 10C de ce boîtier est solidarisé avec une extrémité 16A d'une courroie de serrage 16 ; l'autre extrémité 16B de la courroie de serrage est engagée dans un passage ménagé à cet effet dans une face latérale du boîtier, et ressort en partie supérieure de ce dernier en passant à travers une boucle de serrage indiquée globalement en 20.

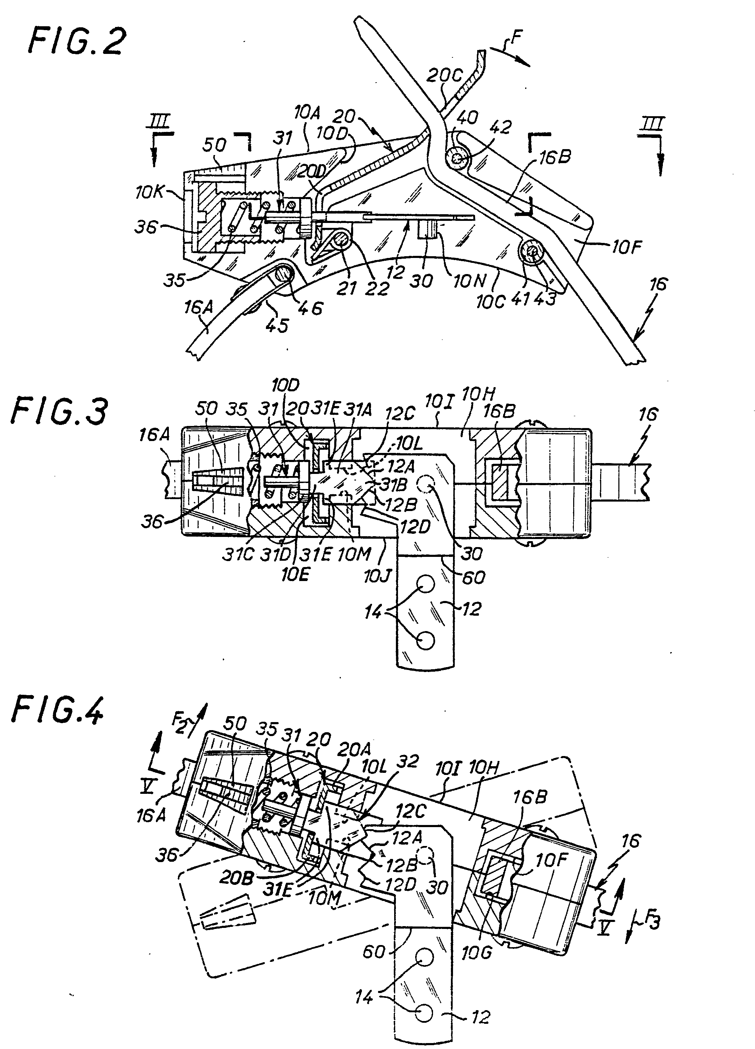

La boucle de serrage 20 précitée est constituée par une lame coudée comportant en partie inférieure des oreilles 20A, 20B (figure 4) engagées sur un axe d'articulation 21 ; un ressort de rappel 22 entourant l'axe précité est apte à rappeler la boucle d'accrochage 20 suivant une direction indiquée par la flèche F à la figure 2.

Le boîtier présente intérieurement (figures 2 et 3) une configuration propre à permettre le débattement de la boucle de serrage 20 grâce à un évidement 10D, 10E, ménagé dans chaque partie de boîtier ; de même, ces parties de boîtier comportent chacun un évidement 10F, 10G permettant le passage de la courroie de serrage 16.

Les parties 10A-10B de boîtier comportent également, au voisinage du fond 10C un logement 10H débouchant sur les faces longitudinales du boîtier, en sorte de permettre l'engagement de la partie terminale de la platine 12 à l'intérieur du boîtier et l'association des deux éléments en question par pivot 30.

Les parties 10A, 10B du boîtier sont également conformées intérieurement pour loger un moyen de verrou escamotable indiqué dans son ensemble par 31 adapté d'une part, à coopérer par une came indiquée globalement en 32 à la figure 1, avec des rampes 12A, 12B ménagées latéralement à la platine 12.

Le verrou escamotable est constitué par un élément plat 31A présentant une partie antérieure en forme de pointe 31B, formant came destinée à coopérer avec les rampes précitées, et une partie postérieure 31C soumise à l'action d'un ressort 35, à compression réglable, au moyen d'une vis de pression 36 accessible par une ouverture 10K ménagée dans la face latérale correspondante du boîtier 10.

Entre la partie antérieure 31A, et la partie postérieure 31C le verrou présente une section réduite 31D et, à ce niveau, il est engagé dans une ouverture longitudinale 20D ménagée dans la boucle de serrage 20. De part et d'autre de la section réduite 31D précitée, des épaulements respectivement 31E sont formés, en sorte que le verrou escamotable ainsi constitué est assujetti à la boucle de serrage 20 pour la faire basculer, lorsqu'il est sollicité, d'une position active de serrage à une position inactive de desserrage.

Il convient de noter que la partie antérieure 31A du verrou escamotable est guidée par engagement de ses côtés longitudinaux dans des rainures 10L, 10M, ménagées à cet effet dans chaque partie 10A, 10B du boîtier.

La platine 12 pourrait ne pas être rapportée sur le cale-pied, ainsi qu'il est représenté, mais être formée par une découpe appropriée du matériau de départ formant le cale-pied, le pivot étant, dans un tel cas, rapporté.

Dans l'exemple illustré le pivot 30 solidaire de la platine 12 est engagé dans des empreintes 10N ménagées à cet effet dans chaque partie du boîtier ; la hauteur du logement 10H étant en correspondance avec l'épaisseur de la platine 12 on obtient un montage dans lequel l'organe de déclenchement 10 peut pivoter sur la platine pratiquement sans jeu.

La platine 12 comporte une encoche centrale formant deux rampes 12A, 12B symétriques, ainsi que deux empreintes 12C, 12D situées au-delà desdites rampes en étant moins profondes que l'encoche centrale.

L'encoche centrale ainsi formée présente un profil correspondant à la partie antérieure 31B du verrou escamotable.

Le brin 16B de la courroie de serrage suit, à l'intérieur de l'organe de déclenchement, un parcours en chicane imposé par la présence de rouleaux 40, 41, avantageusement striés sur leurs surfaces extérieures respectives ; qui sont maintenus en place par des axes 42, 43 assemblant les deux parties 10A, 10B du boîtier 10, le brin 16B en question étant par ailleurs engagé dans une lumière 20C ménagée dans la boucle de serrage.

A son autre extrémité la courroie 16 est fixée à l'organe de déclenchement au moyen d'un collier 45 et d'un axe 46.

L'organe de déclenchement comporte de plus sur sa surface supérieure, au droit de la vis de pression 36, une lumière 50 laissant apparaître celle-ci, la lumière 50 précitée étant avantageusement munie d'une échelle graduée destinée à permettre le contrôle, en combinaison avec un repère périphérique prévu sur la tête de vis, de la compression du ressort 35.

Le fonctionnement du dispositif de sécurité pour courroie de cale-pied tel qu'il vient d'être décrit peut s'analyser de la façon suivante, en partant d'une position correspondant aux figures 1 à 3 pour laquelle la courroie de serrage 16 peut être mise sous tension, dans cette position, le verrou escamotable 31 est en position active c'est-à-dire que la came 32 est engagée dans l'encoche centrale formée par les rampes 12A, 12B ménagées dans la platine 12 ; dans cette position du verrou l'axe longitudinal de l'organe d'enclenchement 10 est aligné avec la courroie de serrage 16.

Lorsqu'un couple, symbolisé par les flèches F2, F3 à la figure 4, est exercé sur la courroie de serrage, plus particulièrement sur les tronçons 16A, 16B qui se trouvent de chaque côté de l'organe d'enclenchement, ce dernier est entraîné en rotation autour du pivot 30 ; étant donné que la platine 12 est fixe et que l'organe de déclenchement est pivoté, le verrou escamotable 31 est — au cours du pivotement — repoussé à l'encontre du ressort 35 sous l'effet de la rampe 12A et vient se caler dans l'empreinte 12C où il reste tant qu'un couple inverse n'est pas exercé sur l'organe de déclenchement.

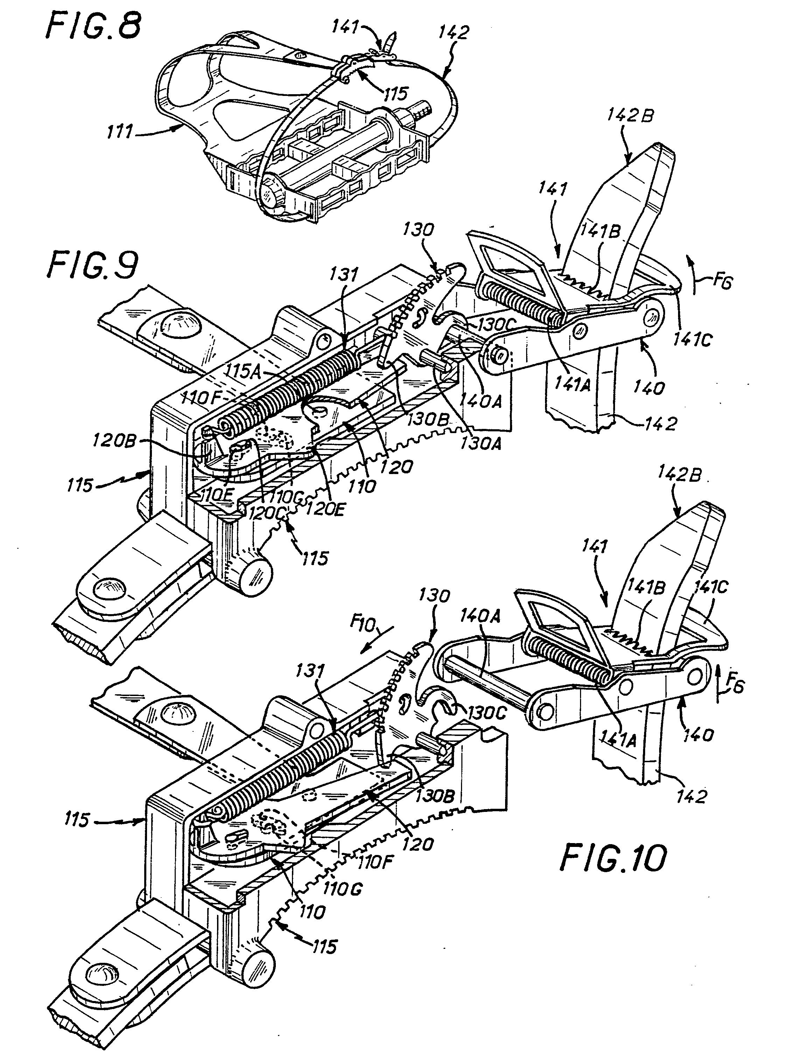

Au cours du déplacement du verrou escamotable 31 les épaulements 31E ont entraîné en rotation (flèche F5 figure 5) la boucle de serrage autour de son axe 21 comprimant ainsi le ressort 22. A ce moment la boucle de serrage 20 a libéré le brin 16B de la courroie de serrage 16 qui, d'un parcours en chicane, est passée à un parcours pratiquement rectiligne, d'où il résulte que le cycliste peut dégager aisément son pied du cale-pied.

Ainsi, en exerçant simplement avec le pied un couple sur la courroie de serrage, la courroie de serrage peut être desserrée sans que le cycliste ait à intervenir manuellement.

Il convient de remarquer que si le pivotement de l'organe de déclenchement 10 est de faible amplitude, c'est-à-dire si la came 32 ne passe pas la crête constituant la partie terminale de l'une ou l'autre des rampes 12A, 12B, la courroie de serrage sera légèrement desserrée du fait que la boucle de serrage 20 aura, par un déplacement angulaire plus ou moins prononcé, modifié le parcours en chicane de la courroie ; mais dès que ladite partie antérieure 31B aura retrouvé sa place dans l'encoche centrale, la courroie de serrage 16 sera à nouveau immobilisée, et elle pourra être de suite remise sous tension simplement en exerçant une traction de bas en haut sur l'extrémité du tronçon 16B. Une telle particularité permet en particulier au cycliste un desserrage anticipé de la courroie en prévision d'un dégagement du pied du cale-pied, sans pour autant nécessiter un réarmement du dispositif.

Il va de soi qu'un tel dispositif de sécurité peut équiper aussi bien un cale-pied monté sur une pédale droite que sur une pédale gauche, ainsi qu'il est bien visible aux figures schématiques 6 et 7 grâce au logement 10H qui permet l'introduction de la platine par l'une ou l'autre des grandes faces de l'organe de déclenchement.

Toutefois la platine 12 sera aménagée selon le cas avec un décrochement 60 approprié de manière telle, que dans les deux cas, la partie terminale de la branche libre du cale-pied se trouve à un même niveau que le fond de l'organe de déclenchement.

On remarquera de plus que la boucle de serrage 20 peut aussi être amenée en position inactive manuellement en exerçant une poussée sur son extrémité libre à l'encontre du ressort 35 de manière à l'amener dans une position sensiblement correspondante à celle illustrée à la figure 5. -

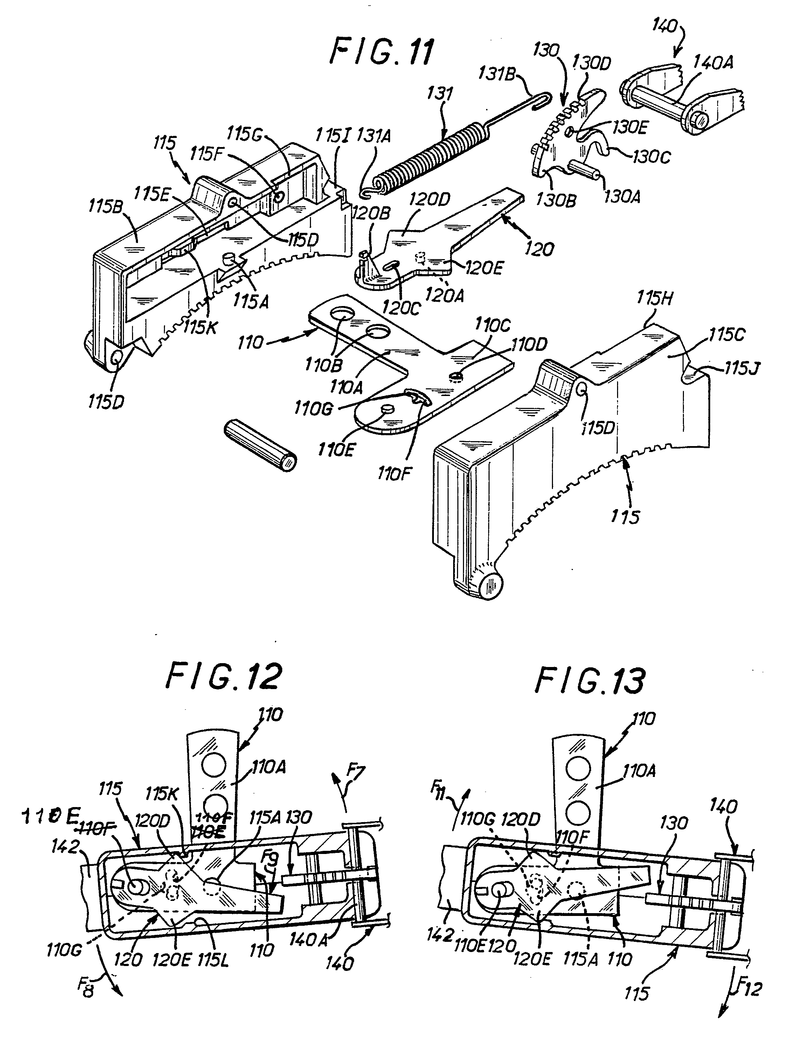

Dans la forme de réalisation choisie et représentée aux figures 8 à 13 le dispositif comprend (figure 11 en particulier) une platine 110 qui peut être constituée par une pièce indépendante ou être ménagée en partie terminale de la branche 111 du cale-pied longeant le dessus de l'empeigne de la chaussure.

Dans l'exemple représenté, la platine 110 est une pièce indépendante de forme générale en T avec une branche 110A comportant deux trous 110B pour fixation, par exemple par rivet, sur la branche 111 du cale-pied, tandis que l'autre branche 110C comporte un trou 110D destiné à être engagé sur un axe de pivotement 115A solidaire de l'organe de déclenchement indiqué globalement par 115.

Cette autre branche 110C comporte également entre un axe 110E et le trou 110D précité une lumière transversale 110F dans laquelle est prévue une empreinte centrale 110G.

L'organe de déclenchement 115 est constitué avantageusement par un boîtier en deux parties 115B, 115C, pourvu de passages 115D pour des moyens d'assemblage non représentés ici ; la partie de boîtier 115B comporte une lumière 115E pour le passage de la branche 110A de la platine, elle porte aussi l'axe de pivotement 115A.

Le boîtier est aménagé intérieurement pour loger un verrou escamotable 120, un crochet de verrouillage 130, un ressort de rappel 131 ; il est aussi adapté à une partie terminale, située à droite des figures, à constituer une butée à un étrier 140 aménagé dans la boucle indiquée globalement en 141 associée à la courroie 142.

Le verrou escamotable 120 est constitué par une pièce plane, allongée, comportant sur sa face destinée à être en vis-à-vis de la platine 110, un téton 120A propre à être engagé dans la lumière 110F ménagée dans la platine, ainsi qu'un moyen d'accrochage 120B pour une extrémité 131A du ressort 131 ; ce verrou escamotable comporte en outre une lumière 120C destinée à être engagée sur l'axe 110E de la platine 110.

On obtient ainsi un pivotement possible du verrou escamotable 120 par rapport à la platine 110 autour de l'axe 110E de cette dernière, et un guidage de ce verrou lors du pivotement au moyen du téton 120A engagé dans la lumière 110F.

Sensiblement au niveau du téton 120A, le verrou escamotable comporte de part et d'autre de son axe longitudinal deux cames 120D, 120E dont l'utilité apparaîtra dans la description du fonctionnement.

Quant au crochet de verrouillage 130, il comporte un axe transversal 130A destiné à être engagé dans des paliers 115F aménagés à cet effet dans les deux parties du boîtier 115B, 115C constituant l'organe de déclenchement, que ce crochet, qui est accessible de l'extérieur de l'organe de déclenchement 115, peut basculer entre les deux parties 115B, 115C ; deux embrèvements 115G, 115H, ménagés dans lesdites parties de boîtier sont prévus pour permettre le débattement du crochet 130.

Le crochet 130 comporte en outre un bec antérieur d'appui 130B et un doigt postérieur d'accrochage 130C, tandis qu'entre ces deux éléments, un bord à secteur sensiblement en arc de cercle est crénelé en 130D, ce bord étant destiné à être en saillie par rapport à la surface supérieure de l'organe de déclenchement. Un passage 130E, ménagé dans le crochet 130, est prévu pour permettre l'accrochage de l'autre extrémité 131B du ressort 131.

La boucle de serrage 141 (figures 8, 9, 10) est une boucle comportant un mécanisme usuel de serrage, c'est-à-dire que si l'on exerce une traction sur l'extrémité libre 142B de la courroie 142, le mécanisme à ressort 141A et denture 141B, maintient la courroie serrée, tandis que le desserrage est obtenu en agissant sur un levier 141C dans le sens de la flèche F6.

L'étrier 140 de la boucle 141 est ici destiné à être accouplé à l'organe de déclenchement dont les deux parties 115B, 115C comportent à une extrémité, de part et d'autre d'un axe longitudinal de symétrie, deux portées d'appui 115I, 115J, sur lesquelles prend appui la barrette 140A de l'étrier 140, la partie centrale de cette barrette étant adaptée à coopérer quant à elle avec le doigt postérieur d'accrochage 130C du crochet de verrouillage 130.

Les deux parties 115B, 115C, formant l'organe de déclenchement, comportent intérieurement chacune un bossage 115K, 115L, bien visibles aux figures 12, 13, qui sont destinés à coopérer avec les cames 120D, 120E ménagées dans le verrou escamotable 120.

A la figure 9, le dispositif de sécurité est représenté dans la position intermédiaire médiane, c'est-à-dire que le verrou escamotable 120 forme une butée au bec antérieur 130B du crochet de verrouillage 130, alors que le doigt d'accrochage postérieur 130C chevauche la barrette 140A de l'étrier 140 de la boucle 141, cette barrette étant par ailleurs en appui sur les portées 115I, 115J ménagées à cet effet dans les parties 115B, 115C du boîtier 115 ; le crochet de verrouillage 130 est sollicité en ouverture par le ressort 131, et le téton 120A est engagé dans l'empreinte 110G prévue dans la lumière 110F, en sorte que l'ensemble est maintenu dans une position médiane intermédiaire stable pour laquelle la boucle 141 est accrochée à l'organe de déclenchement, le serrage ou le desserrage de la courroie 142 étant obtenu de manière usuelle ainsi qu'il est mentionné plus haut.

Avec un tel dispositif de sécurité, si pour une quelconque raison, le cycliste désire libérer rapidement son pied du cale-pied, il fait pivoter son pied par rapport à la pédale en sorte d'exercer un effort latéral sur la courroie 142 du cale-pied, cet effort latéral étant symboliquement représenté par les flèches F7, F8 à la figure 12, ce qui a pour effet de commander l'organe de déclenchement en pivotement par rapport à la platine 110, l'axe 115A pivotant dans le passage 110D de la platine.

Dès l'amorce du pivotement, la rampe 115K exerce une poussée sur la came 120D du verrou escamotable 120, ce dernier, étant monté pivotant autour de l'axe 110E de la platine, pivote brusquement dans le sens de la flèche F9, après un léger déplacement vers l'arrière au cours duquel le téton 120A échappe à l'empreinte 110G ; dès le début du pivotement du verrou 120, le bec 130B du crochet de verrouillage 130 n'est plus retenu et celui-ci, étant sollicité en ouverture par le ressort 131, bascule dans le sens indiqué par la flèche F10 (figure 10) libérant ainsi la barrette 140A et par suite la boucle de serrage 141.

Ainsi qu'on le comprendra aisément, le cycliste n'a aucune manœuvre manuelle à effectuer et peut donc conserver ses deux mains sur le guidon.

On notera qu'un résultat équivalent est obtenu si le cycliste exerce un effort dans une direction opposée à la précédente (flèches F11, F12, figure 13), étant entendu que l'organe de déclenchement 115, ainsi que le verrou escamotable 120 se trouvent entraînés dans une direction opposée à l'exemple décrit ci-dessus.

Un tel dispositif de sécurité, particulièrement compact, donc de peu d'encombrement et de poids réduit, peut équiper aussi bien une pédale gauche qu'une pédale droite, les exemples illustrés aux figures 12, 13 montrant cette possibilité. En effet, il est plus aisé pour le cycliste que l'effort latéral soit exercé en dirigeant le talon de la chaussure vers l'extérieur du cycle ; à la figure 12 s'agissant d'une pédale de droite, l'effort sur la courroie est exercé en dirigeant le talon de la chaussure vers la droite, tandis qu'à la figure 13, s'agissant d'une pédale gauche, l'effort est exercé vers la gauche, un seul et unique dispositif de sécurité étant valable pour une pédale droite ou gauche.

Bien entendu, lorsque le dispositif de sécurité aura fonctionné, il conviendra de procéder à un réarmement, en ramenant le verrou escamotable dans sa position médiane tel qu'illustré à la figure 9, par un pivotement autour de l'axe 115A pendant que, simultanément, le crochet 130 est lui-même ramené en position active à l'encontre de l'action du ressort 131.

Il convient de noter que la position médiane stable du verrou escamotable 120 est obtenue par les effets combinés des cames 120D, 120E coopérant avec les rampes 115K, 115L du ressort 131, et du téton 120A engagé dans l'empreinte 110G de la lumière 110F.

Bien entendu, l'invention n'est pas limitée au mode de réalisation choisi et représenté, lequel est au contraire susceptible de recevoir des modifications sans pour autant sortir du cadre de la présente invention.

## Revendications

1. Dispositif de sécurité pour courroie de calepied, avec une boucle de serrage destinée à maintenir la courroie sous tension, ou au contraire à libérer celle-ci, caractérisé en ce qu'il comprend :
— un organe de déclenchement (10-115) s'étendant transversalement de part et d'autre d'une platine (12-110) auquel il est solidarisé par pivot (30-115A), ledit organe étant, à une de ses parties terminales solidarisé avec une extrémité (16A-142A) de la courroie, tandis que l'autre extrémité (16B-142B) de la courroie est associée à l'autre partie terminale de l'organe de déclenchement en passant au travers d'une boucle de serrage (20-141) :
— un verrou escamotable (31-120) coopérant avec la platine et comportant des moyens de cames (32-120D-120E), ce verrou étant incorporé audit organe de déclenchement (10-115), et apte à maintenir la boucle de serrage (20-141) dans une position active pour laquelle la courroie peut être mise sous tension, ou à la mettre dans une position inactive pour laquelle la courroie est libre en réponse à un pivotement commandé de l'organe de déclenchement (10-115), et ce, sous l'impulsion d'un couple exercé par le pied du cycliste sur les tronçons de courroie situés de part et d'autre de l'organe de déclenchement.

2. Dispositif de sécurité selon la revendication 1, caractérisé en ce que, l'organe de déclenchement (10) comprend un boîtier en deux parties (10A-10B) s'étendant de part et d'autre du pivot (30) et aménagées pour recevoir, dans une zone centrale, une partie terminale de la platine (12) dans laquelle sont ménagés des moyens de rampes (12A-12B) coopérant avec les moyens de cames (32) ménagés dans le verrou escamotable (31) lui-même associé à la boucle de serrage (20), ledit verrou étant disposé d'un côté du pivot (30), tandis que, de l'autre côté du pivot, le boîtier est aménagé pour le passage de la partie terminale libre (16B) de la courroie (16).

3. Dispositif de sécurité selon la revendication 2, caractérisé en ce que le verrou (31) est monté à coulissement longitudinal dans le boîtier (10A-10B), il présente une partie antérieure formant les moyens de came (32) aptes à coopérer avec les moyens de rampes (12A-12B), fixes, ménagés dans la platine (12), et une partie postérieure soumise à l'action d'un ressort de compression (35).

4. Dispositif de sécurité selon l'une quelconque des revendications précédentes, caractérisé en ce que le verrou (31), entre sa partie antérieure et sa partie postérieure, est adapté à coopérer avec la boucle de serrage (20), laquelle est montée oscillante autour d'un axe transversal (21) porté par le boîtier et soumise à l'action d'un ressort de rappel (22).

5. Dispositif de sécurité selon l'une quelconque des revendications précédentes, caractérisé en ce que la boucle de serrage (20) est une lame coudée, ayant une première lumière (20D) pour coopération avec le verrou (31), et une deuxième lumière (20C) pour le passage de la partie terminale libre (16B) de la courroie (16).

6. Dispositif de sécurité selon l'une quelconque des revendications précédentes, caractérisé en ce que le verrou (31) comporte une zone centrale (31D) de section réduite ménageant au moins un épaulement (31E) constituant un moyen de commande en pivotement de la boucle de serrage (20) autour de son axe (21) à l'encontre du ressort de rappel (22).

7. Dispositif de sécurité selon la revendication 2, caractérisé en ce que les moyens de rampes (12A-12B) sont ménagés dans un bord latéral de la platine (12), ils comportent une encoche centrale formant deux rampes (12A-12B) aptes à coopérer avec la partie antérieure (32) formant les moyens de came du verrou escamotable.

8. Dispositif de sécurité selon la revendication 7, caractérisé en ce que la platine (12) comporte de part et d'autre de l'encoche centrale, en forme de V, une empreinte de limitation de course (12C-12D).

9. Dispositif de sécurité selon la revendication 2, caractérisé en ce que la partie terminale de la platine (12) est insérée dans un logement (10H) formé dans les deux parties (10A-10B) de boîtier, ce logement étant apte à assurer le guidage du boîtier par contact des faces de la platine avec des faces correspondantes dudit logement.

10. Dispositif de sécurité selon l'une quelconque des revendications précédentes, caractérisé en ce que le boîtier ((10A-10B) porte, du côté opposé au verrou (31), au moins un rouleau transversal (40) apte à imposer, en combinaison avec la deuxième lumière (20C) ménagée dans la boucle de serrage (20), un parcours en chicane à la partie terminale libre (16B) de la courroie de serrage (16).

11. Dispositif de sécurité selon la revendication 3, caractérisé en ce que le ressort de compression (35) agissant sur le verrou (31) est réglable sous l'effet d'une vis associée (36), tandis qu'une lumière (50) prévue sur la face supérieure du boîtier (10A-10B) comporte une échelle graduée déterminant, selon la position de la tête de la vis devant cette échelle, la force de compression dudit ressort.

12. Dispositif de sécurité selon la revendication 1, caractérisé en ce que le verrou (120) s'étend longitudinalement dans le boîtier (115), il est, à une partie terminale, monté pivotant sur un axe (110E) parallèle au pivot et qui est prévu à cet effet dans la platine (110), tandis que son autre partie terminale est destinée à constituer, en position active, une butée à un crochet (130) apte

à permettre un attelage de la boucle de serrage (141) associée à l'extrémité libre (142B) de la courroie, ledit verrou (120) comportant en outre les moyens de cames (120E-120D) adaptés à coopérer avec des moyens de rampes (115K-115L) ménagées dans le boîtier.

13. Dispositif de sécurité selon la revendication 12, caractérisé en ce que la boucle de serrage (141) comporte un étrier (140) propre à coopérer avec un moyen de butée constitué par deux paliers (115I-115J) espacés ménagés à une partie terminale latérale du boîtier (115), et entre lesquels ledit crochet peut occuper une position active pour laquelle la boucle de serrage (141) est attelée au boîtier (115) ou une position inactive pour laquelle la boucle de serrage est désolidarisée dudit organe.

14. Dispositif de sécurité selon la revendication 13, caractérisé en ce que le crochet (130) s'étend globalement dans un plan qui est perpendiculaire à celui du verrou (120), il comporte un bec antérieur d'appui (130B) destiné à coopérer, en position active, avec ledit verrou, et un doigt d'accrochage postérieur (130C) adapté à coopérer avec ledit étrier (140).

15. Dispositif de sécurité selon l'une quelconque des revendications 12 à 14, caractérisé en ce que le crochet (130) est sollicité en position inactive au moyen d'un ressort de rappel (131), une extrémité du ressort étant connectée au crochet (130) et l'autre au verrou (120).

16. Dispositif de sécurité selon la revendication 12, caractérisé en ce que les moyens de cames (120D-120E) du verrou sont prévus de part et d'autre de son axe de symétrie longitudinal, ils sont débordants par rapport aux côtés du verrou et aptes à coopérer avec les moyens de rampe (115K-115L) ménagés dans une paroi correspondante du boîtier (115).

17. Dispositif de sécurité selon les revendications 15 et 16, caractérisé en ce que les moyens de rampes et de cames précités sont adaptés, en combinaison avec le ressort de rappel (131), à faire occuper audit verrou (120) une position stable médiane lorsque le boîtier (115) n'est pas sollicité en pivotement.

18. Dispositif de sécurité selon l'une quelconque des revendications précédentes 12 à 17, caractérisé en ce que le verrou (120) comporte sur une face, dite inférieure, un téton (120A) coopérant avec une lumière (110F) ménagée dans la platine (110) ainsi qu'une lumière longitudinale (120C) apte à lui conférer un débattement longitudinal, sur un axe (110E) solidaire de la platine (110).

## Claims

1. A safety device for a toe-clip strap with a clamping buckle for holding the strap taut or on the contrary for freeing the strap, characterised in that it comprises :

— a release member (10-115) extending transversely on respective sides of a plate (12-110) to which it is secured by pivot means (30-115A), said release member, at one of its terminal portions, being secured to an end (16A-142A) of the strap, while the other end (16B-142B) of the strap is associated with the other terminal portion of the release member, passing through a clamping buckle (20-141) ; .

— a retractible bolt member (31-120) which cooperates with the plate and which comprises cam means (32-120D-120E), said bolt member being incorporated in said release member (10-115) and being capable of maintaining the clamping buckle (20-141) in an active position in which the strap can be put under tension, or putting the clamping buckle into an inactive position in which the strap is free in response to a controlled pivotal movement of the release member(10-115), that being effected under the impulsion of a turning moment applied by the foot of the cyclist to the portions of strap which are disposed on respective sides of the release member.

2. A safety device according to claim 1 characterised in that the release member (10) comprises a casing in two parts (10A-10B) which extend on respective sides of the pivot means (30) and which are arranged to receive, in a central region, a terminal portion of the plate (12) in which there are provided ramp means (12-12B) co-operating with the cam means (32) provided in the retractible bolt member (31) which is itself associated with the clamping buckle (20), said bolt member being disposed on one side of the pivot means (30) while on the other side of the pivot means, the casing is arranged for the free terminal portion (16B) of the strap (16) to pass through the casing.

3. A safety device according to claim 2 characterised in that the bolt member (31) is mounted for longitudinal sliding movement in the casing (10A-10B), and has a front portion forming the cam means (32) which are arranged to co-operate with the fixed ramp means (12A-12B) provided in the plate (12), and a rear portion subjected to the force of a compression spring (35).

4. A safety device according to any one of the preceding claims characterised in that, between its front portion and its rear portion, the bolt member (31) is adapted to co-operate with the clamp buckle (20) which is mounted for oscillating movement about a transverse axis means (21) carried by the casing, and is subjected to the force of a return spring (22).

5. A safety device according to any one of the preceding claims characterised in that the clamping buckle (20) is an elbow-bent blade member having a first opening (20D) for co-operating with the bolt member (31) and a second opening (20C) for the free terminal portion (16B) of the strap (16) to pass therethrough.

6. A safety device according to any one of the preceding claims characterised in that the bolt member (31) comprises a central region (31D) of reduced section forming at least one shoulder (31E) constituting a means for causing pivotal movement of the clamping buckle (20) about its axis means (21) against the force of the return spring (22).

7. A safety device according to claim 2 characterised in that the ramp means (12A-12B) are provided in a lateral edge of the plate (12), and they comprise a central notch forming two ramp surfaces (12A-12B) capable of co-operating with the front portion (32) forming the cam means of the retractible bolt member.

8. A safety device according to claim 7 characterised in that the plate (12) comprises, on respective sides of the central V-shaped notch, a travel-limiting recess (12C-12D).

9. A safety device according to claim 2 characterised in that the terminal portion of the plate (12) is inserted in a housing (10H) formed in the two parts (10A-10B) of the casing, said housing being capable of providing for guiding the casing by the faces of the plate being in contact with corresponding faces of said housing.

10. A safety device according to any one of the preceding claims characterised in that, on the side opposite to the bolt member (31), the casing (10A-10B) carries at least one transverse roller (40) which, in combination with the second opening (20C) provided in the clamping buckle (20), is capable of causing the free terminal portion (16B) of the clamping strap (16) to follow a chicane-like path.

11. A safety device according to claim 3 characterised in that the compression spring (35) which acts on the bolt member (31) is adjustable under the effect of an associated screw (36), while an opening (50) on the upper face of the casing (10A-10B) comprises a graduated scale for indicating the compression force of said spring, in dependence on the position of the head of the screw in relation to said scale.

12. A safety device according to claim 1 characterised in that the bolt member (120) extends longitudinally in the casing (115) and, at its terminal portion, is mounted pivotally on an axis means (110E) which is parallel to the pivot means and which is provided for that purpose in the plate (110), while its other terminal portion is arranged so as to form, in the active position, an abutment for a latch member (130) for providing for coupling of the clamping buckle (141) associated with the free end (142B) of the strap, said bolt member (120) further comprising the cam means (120E-120D) which are adapted to co-operate with ramp means (115K-115L) provided in the casing.

13. A safety device according to claim 12 characterised in that the clamping buckle (141) comprises a stirrup member (140) capable of co-operating with an abutment means formed by two spaced bearings (115I-115J) provided at a lateral terminal portion of the casing (115) and between which said latch member can occupy an active position in which the clamping buckle (141) is coupled to the casing (115) or an inactive position in which the clamping buckle is released from said member.

14. A safety device according to claim 13 characterised in that the latch member (130) extends generally in a plane which is perpendicular to the plane of the bolt member (120), and it comprises a front bearing lug portion (130B) arranged to co-operate in the active position with said bolt member and a rear hooking projection (130C) which is adapted to co-operate with said stirrup member (140).

15. A safety device according to any one of claims 12 to 14 characterised in that the latch member (130) is urged into the inactive position by means of a return spring (131), one end of the spring being connected to the latch member (130) and the other to the bolt member (120).

16. A safety device according to claim 12 characterised in that the cam means (120D-120E) of the bolt member are provided on respective sides of its longitudinal axis of symmetry, they project with respect to the sides of the bolt member and are capable of co-operating with the ramp means (115K-115L) provided in a corresponding wall portion of the casing (115).

17. A safety device according to claims 15 and 16 characterised in that said ramp and cam means are adapted, in combination with the return spring (131), to cause said bolt member (120) to occupy a stable middle position when the casing (115) is not subjected to a pivoting force.

18. A safety device according to any one of claims 12 to 17 characterised in that the bolt member (120) comprises on one face, referred to as the lower face, a projection (120A) co-operating with an opening (110F) provided in the plate (110), and a longitudinal opening (120C) adapted to impart thereto longitudinal movement, on an axis means (110E) which is fixed to the plate (110).

**Ansprüche**

1. Sicherheitsvorrichtung für einen Fußhalterriemen mit einer Klemmschnalle zum gespannt Halten oder Freigeben des Riemens, gekennzeichnet durch :
— eine Auslösevorrichtung (10-115), die sich quer auf der einen und anderen Seite einer Platine (12-110) erstreckt, mit der sie durch einen Drehzapfen (30-115A) verbunden ist, wobei die Auslösevorrichtung an einem ihrer Endabschnitte mit einem Ende (16A-142A) des Riemens fest verbunden ist, während das andere Ende (16B-142B) des Riemens, indem es durch eine Klemmschnalle (20-141) läuft, mit dem anderen Endabschnitt der Auslösevorrichtung zusammenwirkt ;
— einen wegdrückbaren Riegel (31-120), der mit der Platine zusammenwirkt und Nocken (32-120D-120E) aufweist, wobei dieser Riegel in die Auslösevorrichtung (10-115) eingebaut ist und dazu dient, die Klemmschnalle (20-141) in einer aktiven Stellung zu halten, in welcher der Riemen gespannt werden kann, oder sie infolge einer gesteuerten Schwenkung der Auslösevorrichtung (10-115) in eine inaktive Stellung zu bringen, in welcher der Riemen frei ist, wobei die Schwenkung unter dem Impuls eines vom Fuß des Radfahrers auf die auf der einen und anderen Seite der Auslösevorrichtung liegenden Abschnitte des Riemens ausgeübten Drehmoments erfolgt.

2. Sicherheitsvorrichtung nach Anspruch 1, dadurch gekennzeichnet, daß die Auslösevorrichtung (10) ein Gehäuse aus zwei Teilen (10A-10B) aufweist, die sich beiderseits des Drehzapfens (30) erstrecken und dazu ausgebildet sind, in einem Mittelbereich einen Endabschnitt der Platine (12) aufzunehmen, in welchem Rampen (12A-12B) ausgebildet sind, die mit den Nocken (32) zusammenwirken, die im wegdrückbaren Riegel (31) ausgebildet sind, der selbst mit der Klemmschnalle (20) zusammenwirkt, wobei der Riegel auf einer Seite des Drehzapfens (30) angeordnet ist, während auf der anderen Seite des Drehzapfens das Gehäuse für den Durchtritt des freien Endabschnitts (16B) des Riemens (16) ausgebildet ist.

3. Sicherheitsvorrichtung nach Anspruch 2, dadurch gekennzeichnet, daß der Riegel (31) im Gehäuse (10A-10B) längs verschiebbar gehalten ist und einen Vorderabschnitt, der die Nocken (32), welche mit den in der Platine (12) ausgebildeten feststehenden Rampen (12A-12B) zusammenwirken, bildet, und einen der Wirkung einer Druckfeder (35) unterworfenen hinteren Teil aufweist.

4. Sicherheitsvorrichtung nach einem der vorangehenden Ansprüche, dadurch gekennzeichnet, daß der Riegel (31) zwischen seinem vorderen Teil und seinem hinteren Teil zum Zusammenwirken mit der Klemmschnalle (20) ausgebildet ist, welche um eine vom Gehäuse getragene Querachse (21) schwenkbar gehalten und der Wirkung einer Rückstellfeder (22) unterworfen ist.

5. Sicherheitsvorrichtung nach einem der vorangehenden Ansprüche, dadurch gekennzeichnet, daß die Klemmschnalle (20) eine abgewinkelte Zunge mit einem ersten Loch (20D) zum Zusammenwirken mit dem Riegel (31) und einem zweiten Loch (20C) für den Durchtritt des freien Endabschnitts (16B) des Riemens (16) ist.

6. Sicherheitsvorrichtung nach einem der vorangehenden Ansprüche, dadurch gekennzeichnet, daß der Riegel (31) einen Mittelbereich (31D) von verringertem Querschnitt aufweist, der mindestens eine Schulter (31E) bildet, welche eine Steuervorrichtung zum Schwenken der Klemmschnalle (20) um ihre Achse (21) gegen die Wirkung der Rückstellfeder (22) bildet.

7. Sicherheitsvorrichtung nach Anspruch 2, dadurch gekennzeichnet, daß die Rampen (12A-12B) in einer Seitenkante der Platine (12) ausgebildet sind und einen Mitteleinschnitt aufweisen, der zwei Rampen (12A-12B) bildet, die zum Zusammenwirken mit dem den Nocken bildenden Vorderteil (32) des wegdrückbaren Riegels ausgebildet sind.

8. Sicherheitsvorrichtung nach Anspruch 7, dadurch gekennzeichnet, daß die Platine (12) beiderseits des V-förmigen Mitteleinschnitts eine ihre Bewegungsstrecke begrenzende Kerbe 12C-12D) aufweist.

9. Sicherheitsvorrichtung nach Anspruch 2, dadurch gekennzeichnet, daß der Endabschnitt der Platine (12) in einen Sitz (10H) eingesetzt ist, der in den beiden Teilen (10A-10B) des Gehäuses ausgebildet ist und zur Führung des Gehäuses durch Berührung von Flächen der Platine mit entsprechenden Flächen des Sitzes dient.

10. Sicherheitsvorrichtung nach einem der vorangehenden Ansprüche, dadurch gekennzeichnet, daß das Gehäuse (10A-10B) an der dem Riegel (31) entgegengesetzten Seite mindestens eine Querrolle (40) trägt, welche geeignet ist, in Kombination mit dem in der Klemmschnalle (20) ausgebildeten zweiten Loch (20C) dem Freien Endabschnitt (16B) des Spannriemens (16) einen Zickzack-Verlauf aufzuzwingen.

11. Sicherheitsvorrichtung nach Anspruch 3, dadurch gekennzeichnet, daß die auf den Riegel (31) wirkende Druckfeder (35) unter der Wirkung einer zugehörigen Schraube (36) regelbar ist und daß ein an der oberen Seite des Gehäuses (10A-10B) vorgesehenes Loch (50) eine Skala aufweist, welche entsprechend der Stellung des Kopfes der Schraube vor dieser Skala die Druckkraft der Feder bestimmt.

12. Sicherheitsvorrichtung nach Anspruch 1, dadurch gekennzeichnet, daß der Riegel (120) sich im Gehäuse (115) längs erstreckt, an einem Endabschnitt auf einer zum Drehzapfen parallelen und zu diesem Zweck in der Platine (110) vorgesehenen Achse (110E) schwenkbar gehalten ist und sein anderer Endabschnitt dazu bestimmt ist, in der aktiven Stellung einen Anschlag für einen Haken (130) zu bilden, der ein Anhängen der mit dem freien Ende (142B) des Riemens zusammenwirkenden Klemmschnalle (141) ermöglicht, wobei der Riegel (120) außerdem die Nocken (120E-120D) aufweist, welche mit im Gehäuse ausgebildeten Rampen (115K-115L) zusammenwirken können.

13. Sicherheitsvorrichtung nach Anspruch 12, dadurch gekennzeichnet, daß die Klemmschnalle (141) einen Bügel (140) aufweist, der mit einem Anschlag zusammenwirken kann, der aus zwei an einem seitlichen Endabschnitt des Gehäuses (115) in Abständen voneinander ausgebildeten Lagern (115I-115J) gebildet ist, zwischen denen der Haken eine aktive Stellung, in welcher die Klemmschnalle (141) am Gehäuse (115) angehängt ist, oder eine inaktive Stellung, in welcher die Klemmschnalle von diesem Element befreit ist, einnehmen kann.

14. Sicherheitsvorrichtung nach Anspruch 13, dadurch gekennzeichnet, daß der Haken (130) sich im ganzen in einer zur Ebene des Riegels (120) senkrechten Ebene erstreckt und eine vordere Auflagenase (130B), die in der aktiven Stellung mit dem Riegel zusammenwirkt, und einen hinteren Hakenfinger (130C), der mit dem Bügel (140) zusammenwirkt, aufweist.

15. Sicherheitsvorrichtung nach einem der Ansprüche 12 bis 14, dadurch gekennzeichnet, daß der Haken (130) mittels einer Rückstellfeder (131) in die inaktive Stellung beaufschlagt ist, indem ein Ende der Feder mit dem Haken (130) und das andere mit dem Riegel (120) verbunden ist.

16. Sicherheitsvorrichtung nach Anspruch 12, dadurch gekennzeichnet, daß die Nocken (120D-120E) des Riegels auf der einen und anderen Seite seiner längsverlaufenden Symmetrieachse vorgesehen sind, von den Seiten des Riegels vorstehen und mit den Rampen (115K-115L) zusammenwirken, die in einer entsprechenden Wand des Gehäuses (115) ausgebildet sind.

17. Sicherheitsvorrichtung nach den Ansprüchen 15 und 16, dadurch gekennzeichnet, daß die erwähnten Rampen und Nocken so ausgebildet sind, daß sie in Kombination mit der Rückstellfeder (131) den Riegel (120) in einer stabilen Mittelstellung halten, wenn das Gehäuse (115) keiner Schwenkbewegung unterworfen ist.

18. Sicherheitsvorrichtung nach einem der vorangehenden Ansprüche 12 bis 17, dadurch gekennzeichnet, daß der Riegel (120) an seiner sogenannten Unterseite einen Zapfen (120A), der mit einem in der Platine (110) ausgebildeten Loch (110F) zusammenwirkt, sowie einen Längsschlitz (120C), welcher dem Riegel eine Längsverschiebung auf einer mit der Platine (110) fest verbundenen Achse (110E) ermöglicht, aufweist.

0 008 266

FIG.1

FIG.5

FIG.7

FIG.6

FIG.2

FIG.3

FIG.4

**FIG.8**

**FIG.9**

**FIG.10**

*FIG.11*

*FIG.12*

*FIG.13*